# EUROPEAN PATENT APPLICATION

(11) **EP 0 567 437 A2**
(43) Date of publication of application: **27.10.1993**
(21) Application number: 93830150.4
(22) Date of filing: 07.04.1993
(51) Int. Cl.: A01K 1/03

(54) **Dismountable cabin for pets**

(30) Priority: 09.04.1992 IT MI920351 U
(71) Applicant: EVOLUZIONE S.R.L., I-20139 Milano (IT)
(72) Inventor: Gonella, Federico, Milano (IT)
(74) Representative: Adorno, Silvano

(57) **Abstract**

A dismountable cabin for pets, or bed, consisting of a frame made up of asseblable elements, a base (7) and a flexible covering (8) provided with one opening at least. In this way, the transport and cleaning operations of the bed are easier, said bed, moreover, being particularly comfortable for the animal thanks to the interchangeability of the flexible covering according to the weather conditions.

## Description

The present invention concerns a dismountable cabin for pets, particularly suitable for dogs and cats.

Various solutions may be adopted, as known, to give a shelter to these animals, the most typical being the so-called dog's bed. In general, it is a cabin having a size in accordance with the size of the animal to be housed, provided with an opening to allow the entrance therein. Conventional beds are usually made of wood or plastic, but however they are structures that can not be dismantled or even monolithic. This feature often means a poor handiness and therefore is a major drawback in case the bed is to be moved. This problem gets worse, moreover, when a bed is to be transported, for example by car, because its bulk is often such that it prevents the bed from entering a conventional trunk.

Another drawback of conventional beds is that their inside is usually accessible through a frontal opening only, the same one used by the animal for which the bed is intended. This is a great handicap, particularly for the cleaning operations of the bed interior which result difficult and therefore, often, scarcely accurate. Consequently, it is easily conceivable that a lack of hygiene can compromise the animal's health and possibly that of the human beings coming in contact with said animal.

The object of the present invention is therefore to provide a bed having particular characteristics of handiness and transportability, and allowing an easy carrying out of accurate cleaning operations therein.

This object is achieved by means of a cabin for pets including a dismountable frame, a base and a flexible covering, provided with one opening at least, suitable to cover said frame.

The dismountable cabin or bed according to the present invention has the advantage of being very light, mainly thanks to the lightness of its flexible covering, and it is therefore easily movable even by a single person.

Another advantage is that the bed according to the present invention may be quickly dismantled so that its bulk is extremely reduced thus eliminating any transportation problem.

Another advantage of the present invention is that it is particularly comfortable for the animal for which it is intended. In fact, its flexible covering can be replaced to fit the environmental conditions, in particular the temperature, and an optimum ventilation can also be achieved inside the bed through proper possibly closable openings formed on the surface of the covering. Moreover, in case the animal is to be transferred to a place different from the one it usually lives in, it will be possible to reduce the "psychological impact" with the new habitat by transferring and reassembling also a very significant part of its old habitat such as the bed.

A further advantage of the bed according to the present invention is that it can aesthetically fit the environment in which it is placed, and this, once again, thanks to the interchangeability of its flexible covering. Obviously, this characteristic is particularly advantageous whenever the bed is placed inside a house.

These and other advantages offered by the dismountable cabin for pets according to the present invention will be apparent from the following detailed description of some embodiments thereof, referring to the annexed drawings wherein:
Figs.1 a and 1 b are perspective views of t he frame of a dismountable cabin according to this invention in two different embodiments;
Figs.2a, 2b and 2c are perspective views of the complete dismountable cabin in the same embodiments of figs.1 a and 1b;
Figs.3a, 3b and 3c are various perspective views of a dismountable cabin similar to that offig.2a;
Figs.4a and 4b are perspective views of the frame of a dismountable cabin according to the present invention in other two embodiments.

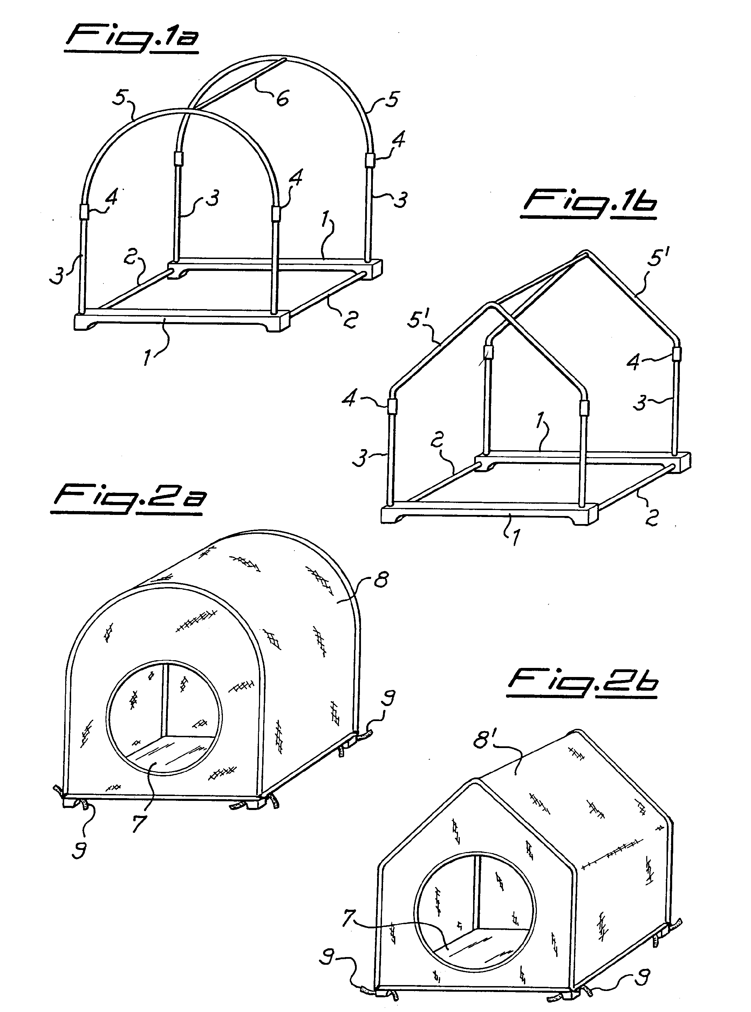

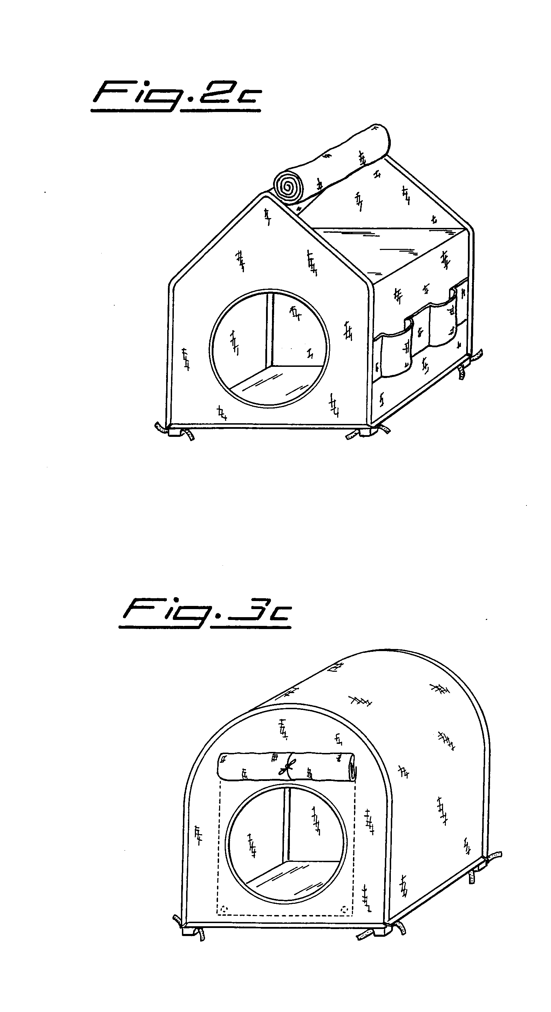

Referring to fig.1a, it is shown that the frame of a dismountable cabin for pets, or bed, according to the present invention is made up of a base structure on which a vertical structure is mounted. The base structure is formed by two transverse supports 1, the front one and the rear one, dap-jointed to two longitudinal members 2. The latter may also be more, according to the base surface and the weight of the animal for which the bed is intended. The vertical structure is formed by four posts 3 vertically inserted in the ends of the supports 1. The front posts and rear posts 3 are connected, respectively, through connecting joints 4, to upper supporting members 5 substantially arc-shaped, in turn, possibly, connected at their top through a straight upper member 6 longitudinally arranged. By using materials with suitable flexibility, it is possible to replace each pair of posts 3 and the related upper element 5, and therefore the connecting joints 4, with a single rod.

Fig.1 b shows that in a different embodiment the frame may also have angled upper elements 5' so that it can support a sloping roof.

In order to give particular lightness characteristics to the above-described frame, the supports 1 and the connecting joints 4 are preferably made of a plastic material while the other elements are of tubular light alloy, but all the said parts may clearly be made of any material suitable to the purpose.

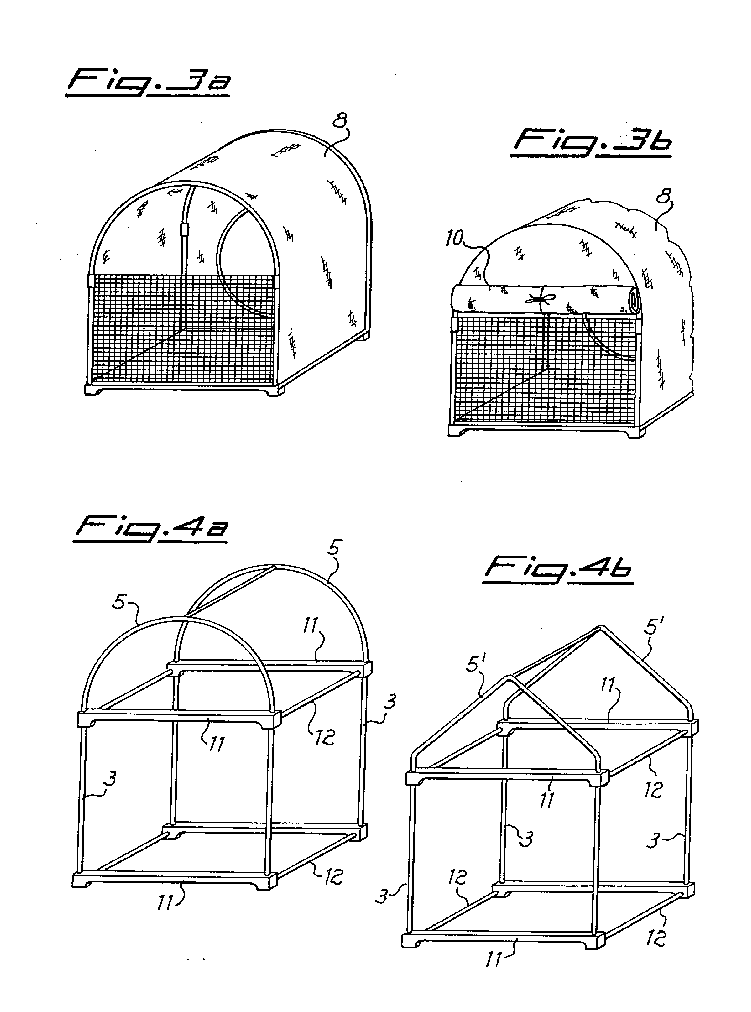

Referring to figs.2a and 2b, it is shown how a base 7 may be placed at first on the above-described frames, said base, by resting on the supports 1 and the longitudinal members 2, forming the internal plane of the dismountable bed according to the present invention. The bed is then completed by the introduction of a flexible covering, 8, 8', respectively, which forms the bed space together with the said base member 7. The flexible coverings 8, 8' are shaped so as to fit perfectly the corresponding frame, and an entrance opening is formed in their front part forming the frontal wall, said opening having any size and shape accordant to the size of the animal which will use it. Furthermore, the covering, once that the frame has been covered, can preferably be fixed to the frame in any way suitable to the purpose, for example by means of laces or strings 9 of the so-called "velcro" type, each one connected, at one end, to the covering. The base 7 preferably consists of a masonite sheet but it may be of any material suitable to the purpose and possibly covered by a fixed mat or a removable cover. Obviously, the covering is flexible so as to have a very limited bulk when the bed is dismantled, and it may be made of plastic, waterproof cotton or any other material suitable to the purpose, possibly padded and/or waterproof.

The covering may also be shaped so as to obtain a space below the roof, separate from the remaining bed and autonomously accessible from outside through a closable opening of any known kind. Said space can be used to advantage as a closet for the animal accessories such as, for example, leashes, bowls, brushes, mats, food supplies, etc. In a similar way, pockets or the like may be provided on the outer walls of the covering, and fig.2c shows an example of a bed provided with the above-described holding solutions.

Further openings provided with a net will preferably be provided on the covering in order to improve the ventilation of the bed space.

In fact, fig.3a shows that the covering 8, in an embodiment thereof, has its rear part, forming the bed rear wall, partly made of a net.

Fig.3b shows that this part made of a net, as well as other possible similar openings, can preferably be covered by means of a portion 10 of the covering which may be rolled up and has a substantially equivalent size, being connected, by its upper side, to the covering 8. Said covering portion 10 can be connected to the covering 8 through any means suitable to the purpose, for example by buttons. Fig.3c shows that a similar covering which may be rolled up is possible on the access side too.

Finally referring to figs.4a and 4b, it is shown how it is possible to strengthen the structure of the bed according to the present invention by mutually connecting the posts 3 through horizontal members, both transverse 11 and longitudinal 12, at the connection points with the upper members 5, 5'. This solution is necessary when the dismountable bed has a considerable size, especially as far as its height is concerned.

Obviously, it will be possible to make a dismountable bed by varying the number and arrangement of the elements forming the framework thereof, for example by providing the use of diagonal members, or by varying the number, the arrangement or the type of the means of connection of the flexible covering to the framework.

## Claims

1. A cabin for pets characterized in that it includes a dismountable frame, a base (7) and a flexible covering (8, 8'), provided with one opening at least, suitable to cover said frame.

2. A cabin for pets according to claim 1, characterized in that said dismountable frame is made up of elements mutually dap-jointed and/or connected by joints (4).

3. A cabin for pets according to claim 1 or 2, characterized in that said dismountable frame includes a base structure (1, 2) on which posts (3) are mounted, being mutually connected in pairs by upper supporting members (5, 5').

4. A cabin for pets according to claim 1 or 2, characterized in that said dismountable frame includes a base structure (1, 2) and a pair of flexible rods each of which is connected at one end to a corner of said base structure, and at the other end to an adjacent corner of the base structure.

5. A cabin for pets according to claim 3 or 4, characterized in that said upper supporting members or the flexible rods are arranged parallel to each other, are arc-shaped (5) or angled (5') and are mutually connected at their top through a straight upper element (6).

6. Acabin for pets according to one of the preceding claims, characterized in that said dismountable frame includes further upper members (11, 12) connecting the posts or the flexible rods and parallel to the corresponding base members (1, 2).

7. Acabin for pets according to one of the preceding claims, characterized in that said base (7) rests on the frame base members (1, 2) and consists of a masonite sheet.

8. Acabin for pets according to one of the preceding claims, characterized in that said flexible covering (8, 8') is fixed to said dismountable frame through strings (9) or similar fixing means.

9. Acabin for pets according to one of the preceding claims, characterized in that said flexible covering (8, 8') forms an internal space separate from the real cabin and autonomously accessible from outside through a closable opening.

10. A cabin for pets according to one of the preceding claims, characterized in that said flexible covering (8, 8') is provided with holding pockets on its outer walls.

11. A cabin for pets according to one of the preceding claims, characterized in that it is provided at least with an opening provided with a net.

12. A cabin for pets according to claim 11, characterized in that at least one of the said openings provided with a net can be covered by a portion (10) of material of equivalent size that can be rolled up.

13. Acabin for pets according to one of the preceding claims, characterized in that the entrance opening can be covered by a portion of material that can be rolled up.
